# EUROPEAN PATENT SPECIFICATION

(11) **EP 3 070 905 B1**
(45) Date of publication and mention of the grant of the patent: **13.01.2021**
(21) Application number: 16160648.8
(22) Date of filing: 16.03.2016
(51) Int. Cl.: H04L 29/06, H04W 12/06

(54) **METHOD AND APPARATUS FOR BINDING DEVICE**
VERFAHREN UND VORRICHTUNG FÜR EINE BINDEVORRICHTUNG
PROCÉDÉ ET APPAREIL POUR DISPOSITIF DE LIAISON

(30) Priority: 16.03.2015 CN 201510114299
(43) Date of publication of application: 21.09.2016
(73) Proprietor: Xiaomi Inc., Beijing 100085 (CN)
(72) Inventor: CHEN, Changbing, Beijing 100085 (CN); ZHOU, Shangtao, Beijing 100085 (CN); HOU, Enxing, Beijing 100085 (CN)
(74) Representative: Cabinet Beau de Loménie

(56) References cited:
- WO-A1-2015/027823
- US-A1- 2011 314 153

## Description

### TECHNICAL FIELD

The present disclosure generally relates to the technical field of computer, and more particularly, to a method and an apparatus for binding a device.

### BACKGROUND

Before using an electronic device, a user usually needs to bind the electronic device with a user account via a terminal so as to configure the electronic device as a private device of the user and thereby to provide personalized service for the user. The electronic device is the device which needs to be bound to the user account, and the terminal is the device assisting the binding between the electronic device and the user account.

If it is assumed that the terminal is a mobile phone and the electronic device is a wristband, the method for binding the device includes: the mobile phone obtains a wristband identification of the wristband and a user account, and sends the wristband identification and the user account to a server; the server sends the mobile phone instruction information for instructing performing predetermined operations on the wristband. When a user performs the predetermined operations on the wristband according to the instruction information, the server receives an operation signal which is generated and sent by the wristband according to the predetermined operations, determines that the wristband is a wristband owned by the user and binds the user account and the wristband identification. The predetermined operations may be pressing a key and the like.

Document WO 2015/027823 discloses methods, binding servers, terminals and systems for binding multiple terminals.

### SUMMARY

In order to solve the problem that whether an electronic device is an electronic device owned by a user is determined according to operations performed on the electronic device by the user and thus the binding procedure is cumbersome and the efficiency is low, the present disclosure provides a method and an apparatus for binding a device.

According to a first aspect of embodiments of the present disclosure, there is provided a method for binding a device. The method is applied in a server and includes:
- receiving a binding request sent from a terminal, wherein the binding request includes a device identification of an electronic device to be bound and a user account corresponding to the terminal;
- detecting whether there exists a redemption recording corresponding to the user account and the device identification in the server, wherein the redemption recording indicates a user redeeming the electronic device via the user account, and wherein the redemption recording is established by the server based on the device identification which is sent from a third party to the user account and is received by the server; and
- when there exists a redemption recording corresponding to the user account and the device identification in the server, binding the user account and the device identification.

In this document we consider that "there exists a redemption recording corresponding to the user account and the device identification in the server" if the user obtained the electronic device in exchange of a virtual currency (e.g., electronic coupons, loyalty points,...) associated to the user account.

In one embodiment, before receiving a binding request sent from a terminal, the method further comprises:
- receiving a network access inquiry request sent from the terminal, wherein the network access inquiry request comprises the user account corresponding to the terminal and the device identification of the electronic device which requests to access a wireless network, and the wireless network is a network which the terminal currently accesses;
- detecting whether there exists a redemption recording corresponding to the user account and the device identification in the server; and
- when there exists a redemption recording corresponding to the user account and the device identification in the server, sending instruction information to the terminal, wherein the instruction information is configured to instruct enabling the electronic device to access the wireless network so that the terminal generates and sends the binding request.

In one embodiment, the redemption recording corresponding to the user account and the device identification is stored by the server when a user redeems the electronic device via the user account.

In one embodiment, the user account corresponding to the terminal comprises a user account which is logged into in the terminal or a user account which is input into the terminal by a user.

In one embodiment, the device identification of the electronic device to be bound is obtained by the terminal according to a network access request broadcast by the electronic device to be bound.

According to a second aspect of embodiments of the present disclosure, there is provided a method for binding a device. The method is applied in a terminal and includes:
- generating a binding request carrying a device identification of an electronic device to be bound and a user account corresponding to the terminal; and
- sending the binding request to a server, wherein the binding request is configured to instruct the server to bind the user account and the device identification when the server determines that there exists a redemption recording corresponding to the user account and the device identification in the server.

In one embodiment; before generating a binding request carrying a device identification of an electronic device to be bound and a user account corresponding to the terminal, the method further comprises:
- receiving a network access request broadcast by the electronic device to be bound, wherein the network access request is configured to request to access a wireless network which the terminal currently accesses, and the network access request comprises the device identification of the electronic device;
- generating a network access inquiry request according to the network access request and sending the network access inquiry request to the server, wherein the network access inquiry request comprises the user account and the device identification;
- receiving instruction information sent by the server, wherein the instruction information is sent by the server when the server determines that there exists a redemption recording corresponding to the user account and the device identification in the server according to the network access inquiry request; and
- enabling the electronic device to access the wireless network according to the instruction information.

In one embodiment, the redemption recording corresponding to the user account and the device identification is stored by the server when a user redeems the electronic device via the user account.

In one embodiment, the user account corresponding to the terminal comprises a user account which is logged into in the terminal or a user account which is input into the terminal by a user.

According to a third aspect of embodiments of the present disclosure, there is provided an apparatus for binding a device. The apparatus is applied in a server and includes:
- a first receiving module configured to receive a binding request sent from a terminal, wherein the binding request includes a device identification of an electronic device to be bound and a user account corresponding to the terminal;
- a first detecting module configured to detect whether there exists in the server a redemption recording corresponding to the user account and the device identification received by the first receiving module; and
- a device binding module configured to, when there exists a redemption recording corresponding to the user account and the device identification in the server, bind the user account and the device identification.

In one embodiment, the apparatus further comprises:
- a second receiving module configured to, before the first receiving module receives the binding request sent by the terminal, receive a network access inquiry request sent from the terminal, wherein the network access inquiry request comprises the user account corresponding to the terminal and the device identification of the electronic device which requests to access a wireless network, and the wireless network is a network which the terminal currently accesses;
- a second detecting module configured to detect whether there exists in the server a redemption recording corresponding to the user account and the device identification received by the second receiving module; and
- an information sending module configured to, when there exists a redemption recording corresponding to the user account and the device identification in the server, send instruction information to the terminal, wherein the instruction information is configured to instruct enabling the electronic device to access the wireless network so that the terminal generates and sends the binding request.

In one embodiment, the redemption recording corresponding to the user account and the device identification is stored by the server when a user redeems the electronic device via the user account.

In one embodiment, the user account corresponding to the terminal comprises a user account which is logged into in the terminal or a user account which is input into the terminal by a user.

In one embodiment, the device identification of the electronic device to be bound is obtained by the terminal according to a network access request broadcast by the electronic device to be bound.

According to a fourth aspect of embodiments of the present disclosure, there is provided an apparatus for binding a device. The apparatus is applied in a terminal and includes:
- a request generating module configured to generate a binding request carrying a device identification of an electronic device to be bound and a user account corresponding to the terminal; and
- a first sending module configured to send the binding request generated by the request generating module to a server, wherein the binding request is configured to instruct the server to bind the user account and the device identification when the server determines that there exists a redemption recording corresponding to the user account and the device identification in the server.

In one embodiment, the apparatus further comprises:
- a request receiving module configured to, before the request generating module generates the binding request carrying the device identification of the electronic device to be bound and the user account corresponding to the terminal, obtain a network access request broadcast by the electronic device to be bound, wherein the network access request is configured to request to access a wireless network which the terminal currently accesses, and the network access request comprises the device identification of the electronic device;
- a second sending module configured to generate a network access inquiry request according to the network access request received by the request receiving module and send the network access inquiry request to the server, wherein the network access inquiry request comprises the user account and the device identification;
- an information receiving module configured to receive instruction information sent by the server, wherein the instruction information is sent by the server when the server determines that there exists a redemption recording corresponding to the user account and the device identification in the server according to the network access inquiry request sent by the second sending module; and
- a network access module configured to enable the electronic device to access the wireless network according to the instruction information received by the information receiving module.

In one embodiment; the redemption recording corresponding to the user account and the device identification is stored by the server when a user redeems the electronic device via the user account.

In one embodiment the user account corresponding to the terminal comprises a user account which is logged into in the terminal or a user account which is input into the terminal by a user.

According to a fifth aspect of embodiments of the present disclosure, there is provided an apparatus for binding a device. The apparatus is applied in a server and includes:
- a processor; and
- a memory for storing instructions executable by the processor;
- wherein the processor is configured to perform:
- receiving a binding request sent from a terminal, wherein the binding request includes a device identification of an electronic device to be bound and a user account corresponding to the terminal;
- detecting whether there exists a redemption recording corresponding to the user account and the device identification in the server; and
- when there exists a redemption recording corresponding to the user account and the device identification in the server, binding the user account and the device identification.

According to a sixth aspect of embodiments of the present disclosure, there is provided an apparatus for binding a device. The apparatus is applied in a terminal and includes:
- a processor; and
- a memory for storing instructions executable by the processor;
- wherein the processor is configured to perform:
- generating a binding request carrying a device identification of an electronic device to be bound and a user account corresponding to the terminal; and
- sending the binding request to a server, wherein the binding request is configured to instruct the server to bind the user account and the device identification when the server determines that there exists a redemption recording corresponding to the user account and the device identification in the server.

The technical solutions provided by embodiments of the present disclosure may have the following advantageous effects:

A binding request sent from a terminal is received, and the binding request includes a device identification of an electronic device to be bound and a user account corresponding to the terminal; whether there exists a redemption recording corresponding to the user account and the device identification in the server is detected; and when there exists a redemption recording corresponding to the user account and the device identification in the server, the user account and the device identification are bound to each other. Thus, whether a user owns an electronic device may be determined according to whether there exists a redemption recording corresponding to the user account and the device identification in the server, and thereby the present disclosure may solve the problem that whether an electronic device is an electronic device owned by a user is determined according to operations performed on the electronic device by the user and thus the binding procedure is cumbersome and the efficiency is low. Consequently, the efficiency for binding a device is improved.

It is to be understood that both the foregoing general description and the following detailed description are exemplary and explanatory only and are not restrictive of the present disclosure, as claimed.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flowchart showing a method for binding a device according to an exemplary embodiment.
Fig. 2 is a flowchart showing a method for binding a device according to an exemplary embodiment.
Fig. 3A is a flowchart showing a method for binding a device according to another exemplary embodiment.
Fig. 3B is a diagram illustratively showing logging in of a user account according to another exemplary embodiment.
Fig. 3C is a diagram illustratively showing connection procedure of an electronic device according to another exemplary embodiment.
Fig. 3D is a diagram illustratively showing a successful connection of an electronic device according to another exemplary embodiment.
Fig. 3E is a diagram illustratively showing a binding prompt of an electronic device according to another exemplary embodiment.
Fig. 3F is a diagram illustratively showing a successful binding of an electronic device according to another exemplary embodiment.
Fig. 4 is a block diagram showing an apparatus for binding a device according to an exemplary embodiment.
Fig. 5 is a block diagram showing an apparatus for binding a device according to an exemplary embodiment.
Fig. 6 is a block diagram showing an apparatus for binding a device according to an exemplary embodiment.
Fig. 7 is a block diagram showing an apparatus for binding a device according to an exemplary embodiment.
Fig. 8 is a block diagram showing an apparatus for binding a device according to an exemplary embodiment.
Fig. 9 is block diagram showing an apparatus for binding a device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

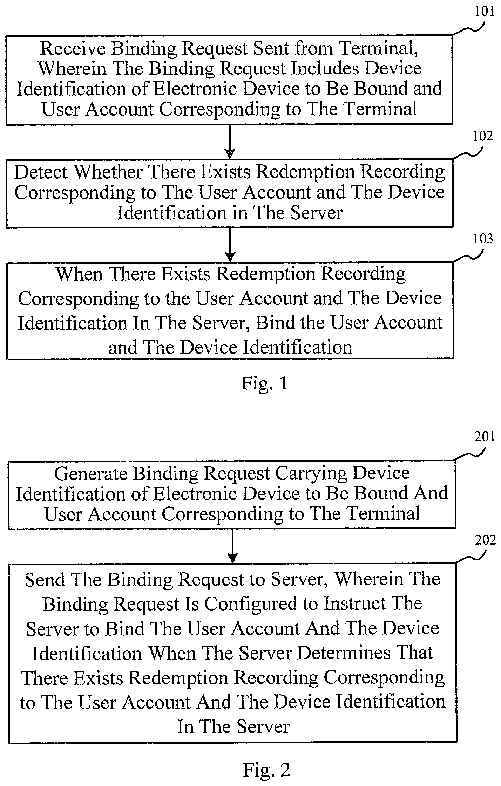

Fig. 1 is a flowchart showing a method for binding a device according to an exemplary embodiment. The method for binding a device is applied in a server. As shown in Fig. 1, the method for binding a device includes the following steps.

In step 101, a binding request sent from a terminal is received. The binding request includes a device identification of an electronic device to be bound and a user account corresponding to the terminal.

In step 102, whether there exists a redemption recording corresponding to the user account and the device identification in the server is detected.

In step 103, when there exists a redemption recording corresponding to the user account and the device identification in the server, the user account and the device identification are bound.

In summary, in the method for binding a device provided by the present disclosure, the binding request includes a device identification of an electronic device to be bound and a user account corresponding to the terminal; whether there exists a redemption recording corresponding to the user account and the device identification in the server is detected; and when there exists a redemption recording corresponding to the user account and the device identification in the server, the user account and the device identification are bound to each other. Thus, whether a user owns an electronic device may be determined according to whether there exists a redemption recording corresponding to the user account and the device identification in the server, and thereby the present disclosure may solve the problem that whether an electronic device is an electronic device owned by a user is determined according to operations performed on the electronic device by the user and thus the binding procedure is cumbersome and the efficiency is low. Consequently, the efficiency for binding a device is improved.

Fig. 2 is a flowchart showing a method for binding a device according to an exemplary embodiment. The method for binding a device is applied in a terminal. As shown in Fig. 2, the method for binding a device includes the following steps.

In step 201, a binding request carrying a device identification of an electronic device to be bound and a user account corresponding to the terminal is generated.

In step 202, the binding request is sent to a server. The binding request is configured to instruct the server to bind the user account and the device identification when the server determines that there exists a redemption recording corresponding to the user account and the device identification in the server.

In summary, in the method for binding a device provided by the present disclosure, a binding request carrying a device identification of an electronic device to be bound and a user account corresponding to the terminal is generated, and the binding request is sent to a server. The binding request is configured to instruct the server to bind the user account and the device identification when the server determines that there exists a redemption recording corresponding to the user account and the device identification in the server. Thus, whether a user owns an electronic device may be determined according to whether there exists a redemption recording corresponding to the user account and the device identification in the server, and thereby the present disclosure may solve the problem that whether an electronic device is an electronic device owned by a user is determined according to operations performed on the electronic device by the user and thus the binding procedure is cumbersome and the efficiency is low. Consequently, the efficiency for binding a device is improved.

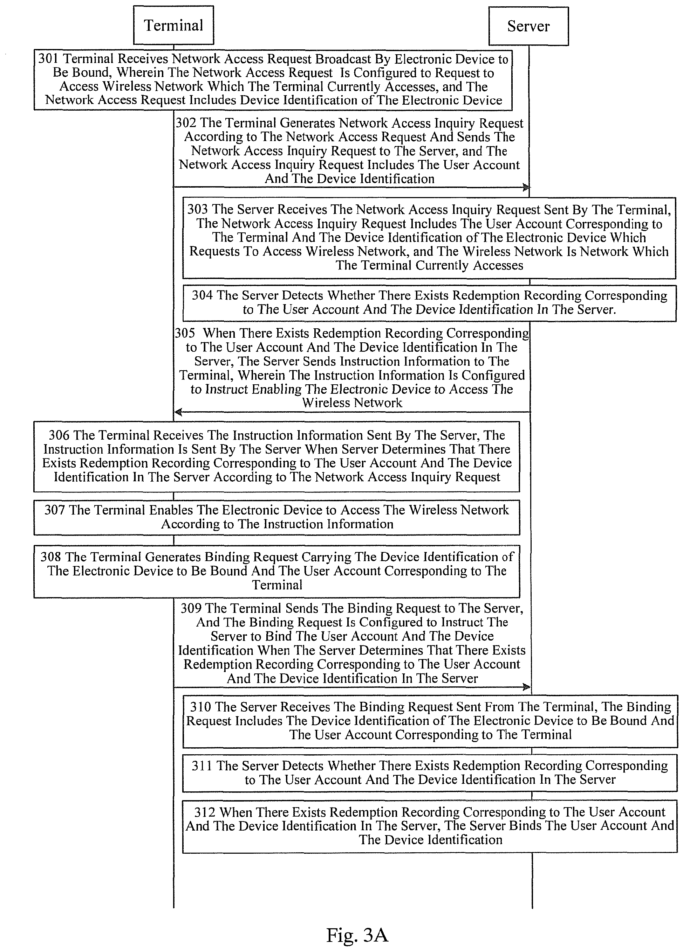

Fig. 3A is a flowchart showing a method for binding a device according to another exemplary embodiment. The method for binding a device is applied in a system including a server and a terminal. As shown in Fig. 3A, the method includes the following steps.

In step 301, a terminal receives a network access request broadcast by an electronic device to be bound. The network access request is configured to request to access a wireless network which the terminal currently accesses, and the network access request includes a device identification of the electronic device.

After power-on of the electronic device, the electronic device may broadcast a network access request externally to request to access a wireless network which the terminal currently accesses.

The electronic device in this step may be an electronic device which is redeemed by a user via a user account, or may not be the electronic device which is redeemed by the user via the user account, for example, may be an electronic device which is given to the user by another user, and the present disclosure does not impose specific limitations on this. The user account is an account which is assigned for the user by the server according to user information carried in an account application request after the user sends the account application request to the server. The user information includes information such as nickname, birthday or career.

The user may employ any one of the following two approaches to redeem the electronic device.

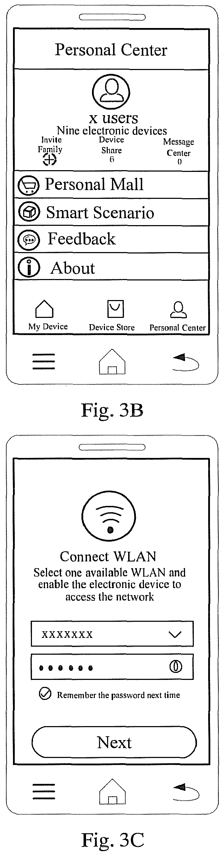

A first approach is that the user redeems the electronic device via the terminal. At this time, the user may log into the user account in a redemption client installed in the terminal or a browser, and then redeem the electronic device via the user account which is logged into. Taking the redemption client as an example, referring to Fig. 3B which schematically shows the logging in of the user account, a user may tap a "Device Store" option in a page of the redemption client, and redeem an electronic device from the "Device Store". The redemption procedure includes: the terminal presents device description information of various electronic devices supplied by the server, when a user needs to redeem a certain electronic device, the terminal selects the electronic device and generates a redemption instruction which includes a device type of the electronic device which the user selects to redeem; the terminal generates a redemption request carrying the device type and the user account, sends the redemption request to the server; the server generates a redemption order according to the redemption request, and instructs a third party to send the electronic device to the user according to the redemption order; the third party selects one electronic device from electronic devices of the device type as indicated in the redemption order, and sends the electronic device to the user.

A second approach is that a user redeems the electronic device by another terminal. For example, the terminal is a mobile phone and another terminal is a computer. The user may log into the user account in the redemption client installed in the computer or a browser, and then redeem an electronic device via the user account which is logged into. The procedure for redeeming an electronic device by another terminal is the same with the procedure for redeeming an electronic device by the terminal, and detailed descriptions thereof are omitted.

In step 302, the terminal generates a network access inquiry request according to the network access request and sends the network access inquiry request to the server. The network access inquiry request includes the user account and the device identification.

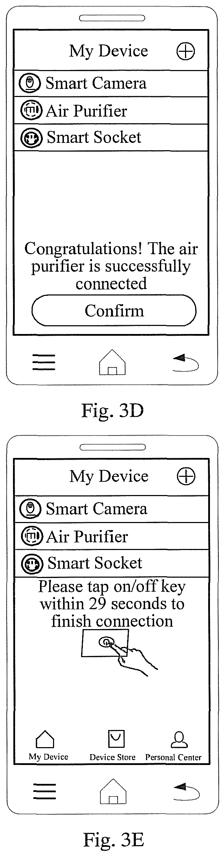

The terminal may directly connect the electronic device to a wireless network, referring to Fig. 3C which illustratively shows a connection procedure of an electronic device, and in which the wireless network is a Wireless Local Area Network (WLAN) for example. The terminal prompts a user to input the name and the password of the WLAN in a display interface; or, when the user input the name and the password of the WLAN through the terminal in the past, the terminal prompts the user to select the name and the password of the WLAN in the display interface. For example, in Fig. 3C, the name is "xxxxxxx", and the password is "......". Referring to Fig. 3D which is a diagram illustratively showing a successful connection of an electronic device, the electronic device is an air purifier for example, and after the air purifier is successfully connected to the wireless network, the terminal displays prompt information "Congratulations! The air purifier is successfully connected" in the display interface. After the electronic device accesses the wireless network, step 308 is performed.

In order to avoid that the terminal enables an electronic device which does not belong to the user to access the wireless network to cause the wireless network stolen, the terminal may detect whether the electronic device is owned by the user before enabling the electronic device to access the wireless network, and thereby determine whether to enable the electronic device to access the wireless network according to the detection result.

In the present embodiment, an approach for detecting whether an electronic device is owned by a user may include detecting whether there exists a redemption recording corresponding to the user account and the device identification in the server. When there exists a redemption recording corresponding to the user account and the device identification in the server, the terminal determines that the electronic device is owned by the user; when there does not exist a redemption recording corresponding to the user account and the device identification in the server, the terminal cannot determine whether the electronic device is owned by the user. The user account is a user account corresponding to the terminal, which includes a user account which is logged into in the terminal or a user account which is input into the terminal by a user.

The redemption recording corresponding to the user account and the device identification is stored by the server when the user redeems the electronic device via the user account. For example, the server may obtain from a third party the device identification sent to the user account to establish a redemption recording. Thus, the terminal may generate a network access inquiry request carrying the user account and the device identification, and send the network access inquiry request to the server so that the server may feedback instructions regarding whether to enable the electronic device to access the wirelesses network according to the network access inquiry request.

In step 303, the server receives the network access inquiry request sent by the terminal. The network access inquiry request includes the user account corresponding to the terminal and the device identification of the electronic device which requests to access a wireless network. The wireless network is a network which the terminal currently accesses.

In step 304, the server detects whether there exists a redemption recording corresponding to the user account and the device identification in the server.

The server may read out the user account in the network access inquiry request, search the device identification corresponding to the user account in the redemption recording, and detect whether the searched device identification is the same with the received device identification; when the searched device identification is same with the received device identification, the server determines that there exists a redemption recording corresponding to the user account and the device identification in the server; when the searched device identification is different from the received device identification, the server determines that there does not exist a redemption recording corresponding to the user account and the device identification in the server. Or, the server may read out the device identification in the network access inquiry request, search the user account corresponding to the device identification in the redemption recording, and detect whether the searched user account is the same with the received user account; when the searched user account is the same with the received user account, the server determines that there exists a redemption recording corresponding to the user account and the device identification in the server; when the searched user account is different from the received user account, the server determines that there does not exist a redemption recording corresponding to the user account and the device identification in the server. Rather, the server may detect whether there exists a redemption recording corresponding to the user account and the device identification in the server by other manners, and the present embodiment does not impose specific limitations on this.

In step 305, when there exists a redemption recording corresponding to the user account and the device identification in the server, the server sends instruction information to the terminal. The instruction information is configured to instruct enabling the electronic device to access the wireless network.

For example, the instruction information may be as follows: the electronic device xx which you redeemed on the date of xx-xx is around you, and please start to connect this electronic device.

When the server determines that there does not exist a redemption recording corresponding to the user account and the device identification in the server, the server may send to the terminal prompt information indicating that there does not exist a redemption recording corresponding to the user account and the device identification in the server, so that the user may determine whether to connect the electronic device to the network according to the prompt information. When the user determines to connect the electronic device to the network, step 308 is performed. At this time, for the procedure for the terminal connecting the electronic device to the wireless network, refer to descriptions regarding Figs. 3C and 3D and step 302, and detailed description is omitted here.

In step 306, the terminal receives the instruction information sent by the server. The instruction information is sent by the server when the server determines that there exists a redemption recording corresponding to the user account and the device identification in the server according to the network access inquiry request.

In step 307, the terminal enables the electronic device to access the wireless network according to the instruction information.

For the procedure for the terminal enabling the electronic device to access the wireless, refer to the descriptions regarding Figs. 3C and 3D and step 302, and detailed description is omitted.

In step 308, the terminal generates a binding request carrying the device identification of the electronic device to be bound and the user account corresponding to the terminal.

In the embodiment, the terminal may generate a binding request for requesting to bind the electronic device and the user account.

In a possible implementation, the binding request includes the device identification and the user account. In another possible implementation, the binding request includes other information regarding the electronic device in addition to the device identification and the user account. The other information may be information which is obtained during enabling the electronic device to access the wireless network via the terminal, for example, the name, description information and address information of the electronic device and the like, and the present disclosure does not impose specific limitations on this.

Optionally, when the terminal has a function of recording the detection result about whether there exists a redemption recording corresponding to the user account and the device identification in the server, the terminal may add the detection result into the binding request.

In step 309, the terminal sends the binding request to the server. The binding request is configured to instruct the server to bind the user account and the device identification when the server determines that there exists a redemption recording corresponding to the user account and the device identification in the server.

In step 310, the server receives the binding request sent from the terminal. The binding request includes the device identification of the electronic device to be bound and the user account corresponding to the terminal.

In step 311, the server detects whether there exists a redemption recording corresponding to the user account and the device identification in the server.

When the binding request only includes the user account and the device identification, for the procedure in which the server detects whether there exists a redemption recording corresponding to the user account and the device identification in the server, refer to the description regarding step 304 and detailed description is omitted. When the binding request includes the detection result in addition to the user account and the device identification, the server may read out the detection result in the binding request, and determine whether there exists a redemption recording corresponding to the user account and the device identification in the server according to the detection result.

Optionally, when the binding request further includes other information regarding the electronic device, the server may detect, according to the other information, whether the electronic device is enabled to access the wireless network with the assistance of the user account. When the electronic device is enabled to access the wireless network with the assistance of the user account and there exists a redemption recording corresponding to the user account and the device identification in the server, step 312 is performed; when the electronic device is enabled to access the wireless network without the assistance of the user account or there does not exist a redemption recording corresponding to the user account and the device identification in the server, the server sends to the terminal instruction information for instructing the user to perform predetermined operations on the electronic device, the user performs the predetermined operations on the electronic device according to the instruction information; at this time, the server receives an operation signal which is generated and sent by the electronic device according to the predetermined operations, determines that the electronic device is owned by the user, and binds the user account and the device identification. Referring to Fig. 3E, which is a diagram illustratively showing the binding prompt of the electronic device, the prompt information may be: please tap on/off key within 29 seconds to finish connection.

In step 312, when there exists a redemption recording corresponding to the user account and the device identification in the server, the server binds the user account and the device identification.

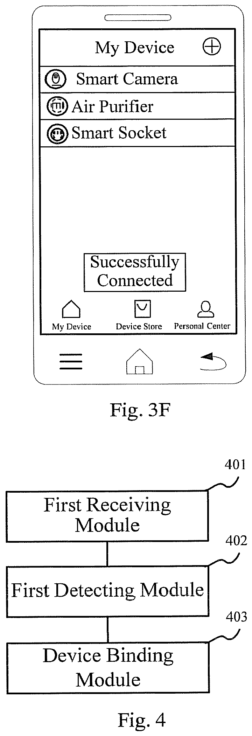

The server establishes a binding relationship between the user account and the device identification. The binding relationship indicates that the user account and the device identification are in a binding state. Referring to Fig. 3F, which is a diagram illustratively showing a successful binding of the electronic device, after the binding relationship between the user account and the device identification is established in the server, the server sends the prompt information "The connection is successful" to the terminal.

In summary, in the method for binding a device provided by the present disclosure, a binding request includes a device identification of an electronic device to be bound and a user account corresponding to a terminal; whether there exists a redemption recording corresponding to the user account and the device identification in the server is detected; and when there exists a redemption recording corresponding to the user account and the device identification in the server, the user account and the device identification are bound to each other. Thus, whether a user owns an electronic device may be determined according to whether there exists a redemption recording corresponding to the user account and the device identification in the server, and thereby the present disclosure may solve the problem that whether an electronic device is an electronic device owned by a user is determined according to operations performed on the electronic device by the user and thus the binding procedure is cumbersome and the efficiency is low. Consequently, the efficiency for binding a device is improved.

Further, whether there exists a redemption recording corresponding to the user account and the device identification in the server is detected; when there exists a redemption recording corresponding to the user account and the device identification in the server, instruction information is sent to the terminal, and the instruction information is configured to instruct the user to enable the electronic device to access the wireless network. Thus, it can be guaranteed that the electronic device which accesses the wireless network is an electronic device owned by the user. Consequently, the problem that electronic devices of other users access the wireless network can be avoided, and thereby network access accuracy is improved.

Fig. 4 is a block diagram showing an apparatus for binding a device according to an exemplary embodiment. The apparatus for binding a device is applied in a server. As shown in Fig. 4, the apparatus includes a first receiving module 401, a first detecting module 402 and a device binding module 403.

The first receiving module 401 is configured to receive a binding request sent from a terminal. The binding request includes a device identification of an electronic device to be bound and a user account corresponding to the terminal.

The first detecting module 402 is configured to detect whether there exists in the server a redemption recording corresponding to the user account and the device identification received by the first receiving module.

The device binding module 403 is configured to, when there exists a redemption recording corresponding to the user account and the device identification in the server, bind the user account and the device identification.

In summary, in the apparatus for binding a device provided by the present disclosure, the binding request includes a device identification of an electronic device to be bound and a user account corresponding to the terminal; whether there exists a redemption recording corresponding to the user account and the device identification in the server is detected; and when there exists a redemption recording corresponding to the user account and the device identification in the server, the user account and the device identification are bound to each other. Thus, whether a user owns an electronic device may be determined according to whether there exists a redemption recording corresponding to the user account and the device identification in the server, and thereby the present disclosure may solve the problem that whether an electronic device is an electronic device owned by a user is determined according to operations performed on the electronic device by the user and thus the binding procedure is cumbersome and the efficiency is low. Consequently, the efficiency for binding a device is improved.

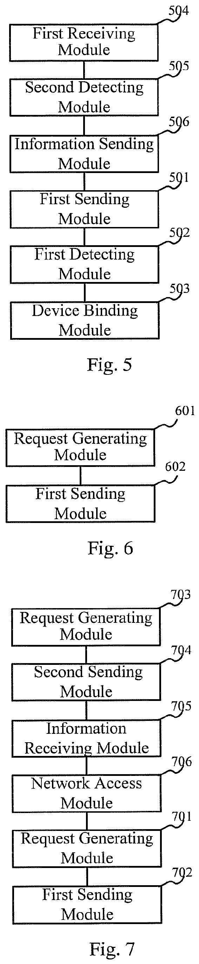

Fig. 5 is a block diagram showing an apparatus for binding a device according to an exemplary embodiment. The apparatus for binding a device is applied in a server, as shown in Fig. 5, the apparatus includes a first receiving module 501, a first detecting module 502 and a device binding module 503.

The first receiving module 501 is configured to receive a binding request sent from a terminal. The binding request includes a device identification of an electronic device to be bound and a user account corresponding to the terminal.

The first detecting module 502 is configured to detect whether there exists in the server a redemption recording corresponding to the user account and the device identification received by the first receiving module 501.

The device binding module 503 is configured to, when there exists a redemption recording corresponding to the user account and the device identification in the server, bind the user account and the device identification.

Optionally, the apparatus provided in the embodiment further includes a second receiving module 504, a second detecting module 505 and an information sending module 506.

The second receiving module 504 is configured to, before the first receiving module 501 receives the binding request sent by the terminal, receive a network access inquiry request sent from the terminal, wherein the network access inquiry request includes the user account corresponding to the terminal and the device identification of the electronic device which requests to access a wireless network, and the wireless network is a network which the terminal currently accesses.

The second detecting module 505 is configured to detect whether there exists in the server a redemption recording corresponding to the user account and the device identification received by the second receiving module 504.

The information sending module 506 is configured to, when there exists a redemption recording corresponding to the user account and the device identification in the server, send instruction information to the terminal, wherein the instruction information is configured to instruct enabling the electronic device to access the wireless network so that the terminal generates and sends the binding request.

Optionally, the redemption recording corresponding to the user account and the device identification is stored by the server when a user redeems the electronic device via the user account.

Optionally, the user account corresponding to the terminal includes a user account which is logged into in the terminal or a user account which is input into the terminal by a user.

Optionally, the device identification of the electronic device to be bound is obtained by the terminal according to a network access request broadcast by the electronic device to be bound.

In summary, in the apparatus for binding a device provided by the present disclosure, the binding request includes a device identification of an electronic device to be bound and a user account corresponding to the terminal; whether there exists a redemption recording corresponding to the user account and the device identification in the server is detected; and when there exists a redemption recording corresponding to the user account and the device identification in the server, the user account and the device identification are bound to each other. Thus, whether a user owns an electronic device may be determined according to whether there exists a redemption recording corresponding to the user account and the device identification in the server, and thereby the present disclosure may solve the problem that whether an electronic device is an electronic device owned by a user is determined according to operations performed on the electronic device by the user and thus the binding procedure is cumbersome and the efficiency is low. Consequently, the efficiency for binding a device is improved.

Further, whether there exists a redemption recording corresponding to the user account and the device identification in the server is detected; when there exists a redemption recording corresponding to the user account and the device identification in the server, instruction information is sent to the terminal, and the instruction information is configured to instruct the user to enable the electronic device to access the wireless network. Thus, it can be guaranteed that the electronic device which accesses the wireless network is an electronic device owned by the user. Consequently, the problem that electronic devices of other users access the wireless network can be avoided, and thereby network access accuracy is improved.

Fig. 6 is a block diagram showing an apparatus for binding a device according to an exemplary embodiment. The apparatus for binding a device is applied in a terminal. As shown in Fig. 6, the apparatus includes a request generating module 601 and a first sending module 602.

The request generating module 601 is configured to generate a binding request carrying a device identification of an electronic device to be bound and a user account corresponding to the terminal.

The first sending module 602 is configured to send the binding request generated by the request generating module 601 to a server, wherein the binding request is configured to instruct the server to bind the user account and the device identification when the server determines that there exists a redemption recording corresponding to the user account and the device identification in the server.

In summary, in the apparatus for binding a device provided by the present disclosure, a binding request carrying a device identification of an electronic device to be bound and a user account corresponding to the terminal is generated, and the binding request is sent to a server. The binding request is configured to instruct the server to bind the user account and the device identification when the server determines that there exists a redemption recording corresponding to the user account and the device identification in the server. Thus, whether a user owns an electronic device may be determined according to whether there exists a redemption recording corresponding to the user account and the device identification in the server, and thereby the present disclosure may solve the problem that whether an electronic device is an electronic device owned by a user is determined according to operations performed on the electronic device by the user and thus the binding procedure is cumbersome and the efficiency is low. Consequently, the efficiency for binding a device is improved.

Fig. 7 is a block diagram showing an apparatus for binding a device according to an exemplary embodiment. The apparatus for binding a device is applied in a terminal. As shown in Fig. 7, the apparatus includes a request generating module 701 and a first sending module 702.

The request generating module 701 is configured to generate a binding request carrying a device identification of an electronic device to be bound and a user account corresponding to the terminal.

The first sending module 702 is configured to send the binding request generated by the request generating module 701 to a server, wherein the binding request is configured to instruct the server to bind the user account and the device identification when the server determines that there exists a redemption recording corresponding to the user account and the device identification in the server.

Optionally, the apparatus provided by the embodiment further includes a request receiving module 703, a second sending module 704, an information receiving module 705 and a network access module 706.

The request receiving module 703 is configured to, before the request generating module 701 generates the binding request carrying the device identification of the electronic device to be bound and the user account corresponding to the terminal, obtain a network access request broadcast by the electronic device to be bound, wherein the network access request is configured to request to access a wireless network which the terminal currently accesses, and the network access request includes the device identification of the electronic device.

The second sending module 704 is configured to generate a network access inquiry request according to the network access request received by the request receiving module 703 and send the network access inquiry request to the server, wherein the network access inquiry request includes the user account and the device identification.

The information receiving module 705 is configured to receive instruction information sent by the server, wherein the instruction information is sent by the server when the server determines that there exists a redemption recording corresponding to the user account and the device identification in the server according to the network access inquiry request sent by the second sending module 704.

The network access module 706 is configured to enable the electronic device to access the wireless network according to the instruction information received by the information receiving module 705.

Optionally, the redemption recording corresponding to the user account and the device identification is stored by the server when a user redeems the electronic device via the user account.

Optionally, the user account corresponding to the terminal includes a user account which is logged into in the terminal or a user account which is input into the terminal by a user.

In summary, in the apparatus for binding a device provided by the present disclosure, a binding request carrying a device identification of an electronic device to be bound and a user account corresponding to the terminal is generated, and the binding request is sent to a server. The binding request is configured to instruct the server to bind the user account and the device identification when the server determines that there exists a redemption recording corresponding to the user account and the device identification in the server. Thus, whether a user owns an electronic device may be determined according to whether there exists a redemption recording corresponding to the user account and the device identification in the server, and thereby the present disclosure may solve the problem that whether an electronic device is an electronic device owned by a user is determined according to operations performed on the electronic device by the user and thus the binding procedure is cumbersome and the efficiency is low. Consequently, the efficiency for binding a device is improved.

Further, a network access inquiry request is generated according to a network access request and the network access inquiry request is sent to a server. Instruction information sent by the server is received. The instruction information is sent by the server when the server determines that there exists a redemption recording corresponding to the user account and the device identification in the server according to the network access inquiry request. The electronic device is enabled to access the wireless network according to the instruction information, and thus it can be guaranteed that the electronic device which accesses the wireless network is an electronic device owned by the user. Consequently, the problem that electronic devices of other users access the wireless network can be avoided, and thereby network access accuracy is improved.

As for the above apparatus embodiments, specific operation performed by each module is described in related method embodiments, and thus detailed description is omitted here.

An exemplary embodiment of the present disclosure provides an apparatus for binding a device which is capable of realizing the method for binding a device provided in the present disclosure. The apparatus for binding a device is applied in a server and includes: a processor; and a memory for storing instructions executable by the processor;
wherein the processor is configured to perform:
- receiving a binding request sent from a terminal, wherein the binding request includes a device identification of an electronic device to be bound and a user account corresponding to the terminal;
- detecting whether there exists a redemption recording corresponding to the user account and the device identification in the server; and
- when there exists a redemption recording corresponding to the user account and the device identification in the server, binding the user account and the device identification.

An exemplary embodiment of the present disclosure provides an apparatus for binding a device which is capable of realizing the method for binding a device provided in the present disclosure. The apparatus for binding a device is applied in a terminal and includes: a processor; and a memory for storing instructions executable by the processor;
wherein the processor is configured to perform:
generating a binding request carrying a device identification of an electronic device to be bound and a user account corresponding to the terminal; and
sending the binding request to a server, wherein the binding request is configured to instruct the server to bind the user account and the device identification when the server determines that there exists a redemption recording corresponding to the user account and the device identification in the server.

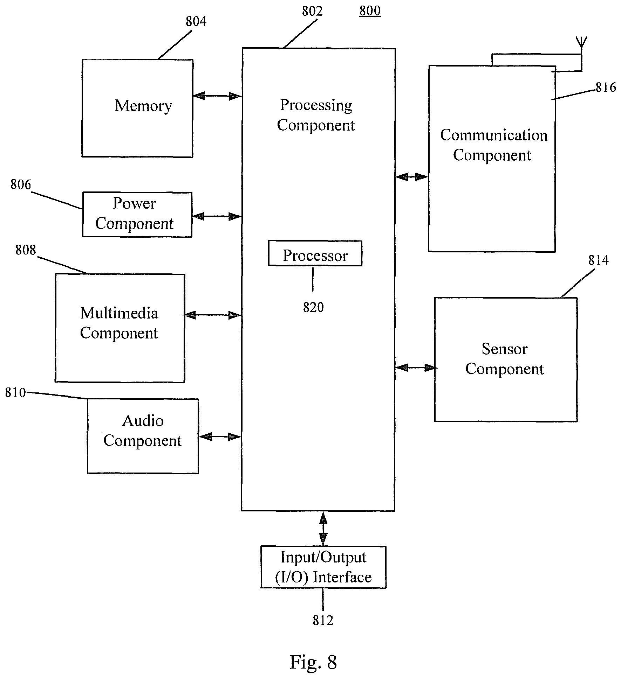

Fig. 8 is a block diagram of an apparatus 800 for binding a device according to an exemplary embodiment. For example, the apparatus 800 may be a mobile phone, a computer, a digital broadcast terminal, a messaging device, a gaming console, a tablet, a medical device, exercise equipment, a personal digital assistant, and the like.

Referring to Fig. 8, the apparatus 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the apparatus 800, such as the operations associated with display, telephone calls, data communications, camera operations, and recording operations. The processing component 802 may include one or more processors 818 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the apparatus 800. Examples of such data include instructions for any applications or methods operated on the apparatus 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the apparatus 800. The power component 806 may include a power management system, one or more power sources, and any other components associated with the generation, management, and distribution of power in the apparatus 800.

The multimedia component 808 includes a screen providing an output interface between the apparatus 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the apparatus 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the apparatus 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the apparatus 800. For instance, the sensor component 814 may detect an open/closed status of the apparatus 800, relative positioning of components, e.g., the display and the keypad, of the apparatus 800, a change in position of the apparatus 800 or a component of the apparatus 800, a presence or absence of user contact with the apparatus 800, an orientation or an acceleration/deceleration of the apparatus 800, and a change in temperature of the apparatus 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the apparatus 800 and other devices. The apparatus 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 818 in the apparatus 800, for performing the above-described methods. For example, the non-transitory computer-readable storage medium may be a ROM, a RAM, a CD-ROM, a magnetic tape, a floppy disc, an optical data storage device, and the like.

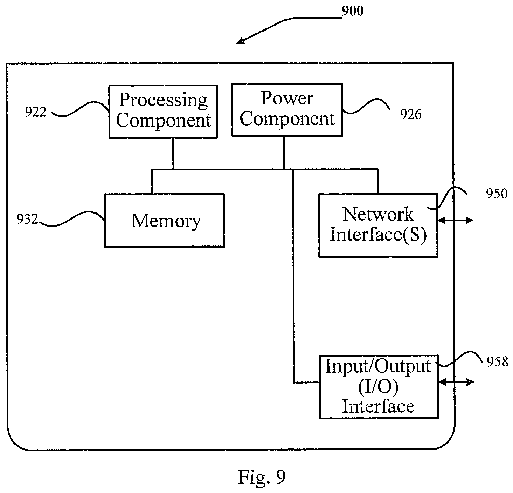

Fig. 9 is a block diagram of an apparatus 900 for binding a device according to an exemplary embodiment. For example, the apparatus 900 may be provided as a server. Referring to Fig. 9, the apparatus 900 includes a processing component 922 that further includes one or more processors, and memory resources represented by a memory 932 for storing instructions executable by the processing component 922, such as application programs. The application programs stored in the memory 932 may include one or more modules each corresponding to a set of instructions. Further, the processing component 922 is configured to execute the instructions to perform the above described method for binding a device.

The apparatus 900 may also include a power component 926 configured to perform power management of the apparatus 900, wired or wireless network interface(s) 950 configured to connect the device 900 to a network, and an input/output (I/O) interface 958. The apparatus 900 may operate based on an operating system stored in the memory 932, such as Windows Server™, Mac OS X™, Unix™, Linux™, FreeBSD™, or the like.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for binding a device, the method being applied in a server and comprising:
receiving (101) a binding request sent from a terminal, wherein the binding request comprises a device identification of an electronic device to be bound;
the method being **characterized in that** the binding request further comprises a user account corresponding to the terminal; and **in that** the method further comprises:
detecting (102) whether there exists a redemption recording corresponding to the user account and the device identification in the server, wherein the redemption recording indicates a user redeeming the electronic device via the user account, and wherein the redemption recording is established by the server based on the device identification which is sent from a third party to the user account and is received by the server; and
when there exists a redemption recording corresponding to the user account and the device identification in the server, binding (103) the user account and the device identification.

2. The method according to claim 1, **characterized in that** before receiving (101) a binding request sent from a terminal, the method further comprises:
receiving (303) a network access inquiry request sent from the terminal, wherein the network access inquiry request comprises the user account corresponding to the terminal and the device identification of the electronic device which requests to access a wireless network, and the wireless network is a network which the terminal currently accesses;
detecting (304) whether there exists a redemption recording corresponding to the user account and the device identification in the server; and
when there exists a redemption recording corresponding to the user account and the device identification in the server, sending (305) instruction information to the terminal, wherein the instruction information is configured to instruct enabling the electronic device to access the wireless network so that the terminal generates and sends the binding request.

3. The method according to claim 1 or 2, **characterized in that** the redemption recording corresponding to the user account and the device identification is stored by the server when a user redeems the electronic device via the user account.

4. The method according to claim 1, **characterized in that** the user account corresponding to the terminal comprises a user account which is logged into in the terminal or a user account which is input into the terminal by a user.

5. The method according to claim 1, **characterized in that** the device identification of the electronic device to be bound is obtained by the terminal according to a network access request broadcast by the electronic device to be bound.

6. A method for binding a device, the method being applied in a terminal and comprising:
generating (201) a binding request carrying a device identification of an electronic device to be bound;
the method being **characterized in that** the binding request further comprises a user account corresponding to the terminal; and **in that** the method further comprises:
sending (202) the binding request to a server, wherein the binding request is configured to instruct the server to bind the user account and the device identification when the server determines that there exists a redemption recording corresponding to the user account and the device identification in the server,
wherein the redemption recording indicates a user redeeming the electronic device via the user account, wherein the redemption recording is established by the server based on the device identification which is sent from a third party to the user account and is received by the server.

7. The method according to claim 6, **characterized in that** before generating (201) a binding request carrying a device identification of an electronic device to be bound and a user account corresponding to the terminal, the method further comprises:
receiving (301) a network access request broadcast by the electronic device to be bound, wherein the network access request is configured to request to access a wireless network which the terminal currently accesses, and the network access request comprises the device identification of the electronic device;
generating (302) a network access inquiry request according to the network access request and sending the network access inquiry request to the server, wherein the network access inquiry request comprises the user account and the device identification;
receiving (306) instruction information sent by the server, wherein the instruction information is sent by the server when the server determines that there exists a redemption recording corresponding to the user account and the device identification in the server according to the network access inquiry request; and
enabling (307) the electronic device to access the wireless network according to the instruction information.

8. The method according to claim 7, **characterized in that** the redemption recording corresponding to the user account and the device identification is stored by the server when a user redeems the electronic device via the user account.

9. The method according to any one of claims 6 to 8, **characterized in that** the user account corresponding to the terminal comprises a user account which is logged into in the terminal or a user account which is input into the terminal by a user.

10. An apparatus for binding a device, the apparatus being applied in a server and comprising:
a first receiving module (401, 501) configured to receive a binding request sent from a terminal, wherein the binding request comprises a device identification of an electronic device to be bound;
the apparatus being **characterized in that** the binding request further comprises a user account corresponding to the terminal; and **in that** the apparatus further comprises:
a first detecting module (402, 502) configured to detect whether there exists in the server a redemption recording corresponding to the user account and the device identification received by the first receiving module, wherein the apparatus being **characterized in that** the redemption recording indicates a user redeeming the electronic device via the user account, and wherein the redemption recording is established by the server based on the device identification which is sent from a third party to the user account and is received by the server; and
a device binding module (403, 503) configured to, when there exists a redemption recording corresponding to the user account and the device identification in the server, bind the user account and the device identification.

11. The apparatus according to claim 10, **characterized in that** the apparatus further comprises:
a second receiving module (504) configured to, before the first receiving module receives the binding request sent by the terminal, receive a network access inquiry request sent from the terminal, wherein the network access inquiry request comprises the user account corresponding to the terminal and the device identification of the electronic device which requests to access a wireless network, and the wireless network is a network which the terminal currently accesses;
a second detecting module (505) configured to detect whether there exists in the server a redemption recording corresponding to the user account and the device identification received by the second receiving module; and
an information sending module (506) configured to, when there exists a redemption recording corresponding to the user account and the device identification in the server, send instruction information to the terminal, wherein the instruction information is configured to instruct enabling the electronic device to access the wireless network so that the terminal generates and sends the binding request.

12. An apparatus for binding a device, the apparatus being applied in a terminal and comprising:
a request generating module (601, 701) configured to generate a binding request carrying a device identification of an electronic device to be bound;
the apparatus being **characterized in that** the binding request further comprises a user account corresponding to the terminal; and **in that** the apparatus further comprises:
a first sending module (602, 702) configured to send the binding request generated by the request generating module to a server, wherein the binding request is configured to instruct the server to bind the user account and the device identification when the server determines that there exists a redemption recording corresponding to the user account and the device identification in the server,
wherein the redemption recording indicates a user redeeming the electronic device via the user account, and wherein the redemption recording is established by the server based on the device identification which is sent from a third party to the user account and is received by the server.

13. The apparatus according to claim 12, **characterized in that** the apparatus further comprises:
a request receiving module (703) configured to, before the request generating module generates the binding request carrying the device identification of the electronic device to be bound and the user account corresponding to the terminal, obtain a network access request broadcast by the electronic device to be bound, wherein the network access request is configured to request to access a wireless network which the terminal currently accesses, and the network access request comprises the device identification of the electronic device;
a second sending module (704) configured to generate a network access inquiry request according to the network access request received by the request receiving module and send the network access inquiry request to the server, wherein the network access inquiry request comprises the user account and the device identification;
an information receiving module (705) configured to receive instruction information sent by the server, wherein the instruction information is sent by the server when the server determines that there exists a redemption recording corresponding to the user account and the device identification in the server according to the network access inquiry request sent by the second sending module; and
a network access module (706) configured to enable the electronic device to access the wireless network according to the instruction information received by the information receiving module.

## Patentansprüche

1. Verfahren zum Verbinden einer Vorrichtung, wobei das Verfahren in einem Server angewendet wird und umfasst:
Empfangen (101) einer Verbindungsanfrage, die von einem Endgerät gesendet wird, wobei die Verbindungsanfrage eine Gerätekennung eines zu verbindenden elektronischen Geräts umfasst,
wobei das Verfahren **dadurch gekennzeichnet ist, dass** die Verbindungsanfrage ferner ein dem Endgerät entsprechendes Benutzerkonto umfasst und dass das Verfahren ferner umfasst:
Erfassen (102), ob es in dem Server eine Einlösungsaufzeichnung gibt, die dem Benutzerkonto und der Gerätekennung entspricht, wobei die Einlösungsaufzeichnung einen Benutzer anzeigt, der das elektronische Gerät über das Benutzerkonto einlöst, und wobei die Einlösungsaufzeichnung von dem Server auf der Grundlage der Gerätekennung eingerichtet wird, die von einer dritten Partei an das Benutzerkonto gesendet und von dem Server empfangen wird, und
wenn es eine Einlösungsaufzeichnung gibt, die dem Benutzerkonto und der Gerätekennung im Server entspricht, Verbinden (103) des Benutzerkontos und der Gerätekennung.

2. Verfahren nach Anspruch 1, **dadurch gekennzeichnet, dass** das Verfahren vor dem Empfangen (101) einer von einem Endgerät gesendeten Verbindungsanfrage ferner umfasst:
Empfangen (303) einer von dem Endgerät gesendeten Netzzugangsanforderungsanfrage, wobei die Netzzugangsanforderungsanfrage das dem Endgerät entsprechende Benutzerkonto und die Gerätekennung des elektronischen Geräts umfasst, das den Zugriff auf ein drahtloses Netz anfordert, und wobei das drahtlose Netz ein Netz ist, auf das das Endgerät gegenwärtig zugreift,
Erfassen (304), ob es eine Einlösungsaufzeichnung gibt, die dem Benutzerkonto und der Gerätekennung im Server entspricht, und
wenn es eine Einlösungsaufzeichnung gibt, die dem Benutzerkonto und der Gerätekennung im Server entspricht, Senden (305) von Anweisungsinformationen an das Endgerät, wobei die Anweisungsinformationen dazu konfiguriert sind, anzuweisen, das elektronische Gerät in die Lage zu versetzen, auf das drahtlose Netzwerk zuzugreifen, so dass das Endgerät die Verbindungsanfrage erzeugt und sendet.

3. Verfahren nach Anspruch 1 oder 2, **dadurch gekennzeichnet, dass** die dem Benutzerkonto und der Gerätekennung entsprechende Einlösungsaufzeichnung vom Server gespeichert wird, wenn ein Benutzer das elektronische Gerät über das Benutzerkonto einlöst.

4. Verfahren nach Anspruch 1, **dadurch gekennzeichnet, dass** das dem Endgerät entsprechende Benutzerkonto ein Benutzerkonto, das im Endgerät angemeldet ist, oder ein Benutzerkonto, das von einem Benutzer in das Endgerät eingegeben wird, umfasst.

5. Verfahren nach Anspruch 1, **dadurch gekennzeichnet, dass** die Gerätekennung des zu verbindenden elektronischen Geräts durch das Endgerät gemäß einer Netzzugangsanforderung erhalten wird, die von dem zu verbindenden elektronischen Gerät gesendet wird.

6. Verfahren zum Verbinden einer Vorrichtung, wobei das Verfahren in einem Endgerät angewendet wird und umfasst:
Erzeugen (201) einer Verbindungsanfrage, die eine Gerätekennung eines zu verbindenden elektronischen Geräts trägt,
wobei das Verfahren **dadurch gekennzeichnet ist, dass** die Verbindungsanforderung ferner ein dem Endgerät entsprechendes Benutzerkonto umfasst und dass das Verfahren ferner umfasst:
Senden (202) der Verbindungsanfrage an einen Server, wobei die Verbindungsanfrage dazu konfiguriert ist, den Server anzuweisen, das Benutzerkonto und die Gerätekennung zu verbinden, wenn der Server feststellt, dass es eine Einlösungsaufzeichnung gibt, die dem Benutzerkonto und der Gerätekennung in dem Server entspricht,
wobei die Einlösungsaufzeichnung einen Benutzer anzeigt, der das elektronische Gerät über das Benutzerkonto einlöst, wobei die Einlösungsaufzeichnung durch den Server auf der Grundlage der Gerätekennung eingerichtet wird, die von einer dritten Partei an das Benutzerkonto gesendet und durch den Server empfangen wird.

7. Verfahren nach Anspruch 6, **dadurch gekennzeichnet, dass** das Verfahren vor dem Erzeugen (201) einer Verbindungsanfrage, die eine Gerätekennung eines zu verbindenden elektronischen Geräts und ein dem Endgerät entsprechendes Benutzerkonto trägt, ferner umfasst:
Empfangen (301) einer Netzzugangsanforderung, die von der zu verbindenden elektronischen Vorrichtung gesendet wird, wobei die Netzzugangsanforderung dazu konfiguriert ist, den Zugriff auf ein drahtloses Netz anzufordern, auf das das Endgerät gegenwärtig zugreift, und wobei die Netzzugangsanforderung die Gerätekennung der elektronischen Vorrichtung umfasst,
Erzeugen (302) einer Netzzugangsanforderungsanfrage gemäß der Netzzugangsanforderung und Senden der Netzzugangsanforderungsanfrage an den Server, wobei die Netzzugangsanforderungsanfrage das Benutzerkonto und die Gerätekennung umfasst,
Empfangen (306) von Anweisungsinformationen, die vom Server gesendet werden, wobei die Anweisungsinformationen vom Server gesendet werden, wenn der Server feststellt, dass es eine Einlösungsaufzeichnung gibt, die dem Benutzerkonto und der Gerätekennung im Server gemäß der Netzzugangsanfrage entspricht, und
Ermöglichen (307) des Zugriffs des elektronischen Geräts auf das drahtlose Netzwerk gemäß den Anweisungsinformationen.

8. Verfahren nach Anspruch 7, **dadurch gekennzeichnet, dass** die dem Benutzerkonto und der Gerätekennung entsprechende Einlösungsaufzeichnung vom Server gespeichert wird, wenn ein Benutzer das elektronische Gerät über das Benutzerkonto einlöst.

9. Verfahren nach einem der Ansprüche 6 bis 8, **dadurch gekennzeichnet, dass** das dem Endgerät entsprechende Benutzerkonto ein Benutzerkonto umfasst, das im Endgerät angemeldet ist, oder ein Benutzerkonto, das von einem Benutzer in das Endgerät eingegeben wird.

10. Vorrichtung zum Verbinden eines Geräts, wobei die Vorrichtung in einem Server angewendet wird und umfasst:
ein erstes Empfangsmodul (401, 501), das dazu konfiguriert ist, eine von einem Endgerät gesendete Verbindungsanfrage zu empfangen, wobei die Verbindungsanfrage eine Gerätekennung eines zu verbindenden elektronischen Geräts umfasst,
wobei die Vorrichtung **dadurch gekennzeichnet ist, dass** die Verbindungsanfrage ferner ein dem Endgerät entsprechendes Benutzerkonto umfasst und dass die Vorrichtung ferner umfasst:
ein erstes Erfassungsmodul (402, 502), das dazu konfiguriert ist, zu erfassen, ob in dem Server eine Einlösungsaufzeichnung existiert, die dem Benutzerkonto und der von dem ersten Empfangsmodul empfangenen Gerätekennung entspricht, wobei die Vorrichtung **dadurch gekennzeichnet ist, dass** die Einlösungsaufzeichnung einen Benutzer anzeigt, der das elektronische Gerät über das Benutzerkonto einlöst, und wobei die Einlösungsaufzeichnung von dem Server auf der Grundlage der Gerätekennung eingerichtet wird, die von einer dritten Partei zu dem Benutzerkonto gesendet und von dem Server empfangen wird, und
ein Geräteverbindungsmodul (403, 503), das dazu konfiguriert ist, bei Vorhandensein einer dem Benutzerkonto und der Gerätekennung entsprechenden Einlösungsaufzeichnung im Server das Benutzerkonto und die Gerätekennung zu verbinden.

11. Vorrichtung nach Anspruch 10, **dadurch gekennzeichnet, dass** die Vorrichtung ferner umfasst:
ein zweites Empfangsmodul (504), das dazu konfiguriert ist, bevor das erste Empfangsmodul die von dem Endgerät gesendete Verbindungsanforderung empfängt, eine von dem Endgerät gesendete Netzzugangsanforderungsanfrage zu empfangen, wobei die Netzzugangsanforderungsanfrage das dem Endgerät entsprechende Benutzerkonto und die Gerätekennung des elektronischen Geräts umfasst, das den Zugriff auf ein drahtloses Netz anfordert, und das drahtlose Netz ein Netz ist, auf das das Endgerät gegenwärtig zugreift,
ein zweites Erfassungsmodul (505), das dazu konfiguriert ist, zu erfassen, ob in dem Server eine Einlösungsaufzeichnung existiert, die dem Benutzerkonto und der Gerätekennung entspricht, die von dem zweiten Empfangsmodul empfangen wurde, und
ein Informationssendemodul (506), das dazu konfiguriert ist, wenn es eine Einlösungsaufzeichnung gibt, die dem Benutzerkonto und der Gerätekennung in dem Server entspricht, Anweisungsinformationen an das Endgerät zu senden, wobei die Anweisungsinformationen dazu konfiguriert sind, anzuweisen, das elektronische Gerät in die Lage zu versetzen, auf das drahtlose Netzwerk zuzugreifen, so dass das Endgerät die Verbindungsanforderung erzeugt und sendet.

12. Vorrichtung zum Verbinden einer Vorrichtung, wobei die Vorrichtung in einem Endgerät angewendet wird und umfasst:
ein Anforderungserzeugungsmodul (601, 701), das dazu konfiguriert ist, eine Verbindungsanforderung zu erzeugen, die eine Gerätekennung eines zu verbindenden elektronischen Geräts trägt,
wobei die Vorrichtung **dadurch gekennzeichnet ist, dass** die Verbindungsanforderung ferner ein dem Endgerät entsprechendes Benutzerkonto umfasst und dass die Vorrichtung ferner umfasst:
ein erstes Sendemodul (602, 702), das dazu konfiguriert ist, die von dem Anforderungserzeugungsmodul erzeugte Verbindungsanforderung an einen Server zu senden, wobei die Verbindungsanforderung dazu konfiguriert ist, den Server anzuweisen, das Benutzerkonto und die Gerätekennung zu verbinden, wenn der Server feststellt, dass es eine Einlösungsaufzeichnung gibt, die dem Benutzerkonto und der Gerätekennung in dem Server entspricht,
wobei die Einlösungsaufzeichnung einen Benutzer anzeigt, der das elektronische Gerät über das Benutzerkonto einlöst, und wobei die Einlösungsaufzeichnung durch den Server auf der Grundlage der Gerätekennung eingerichtet wird, die von einer dritten Partei an das Benutzerkonto gesendet und durch den Server empfangen wird.

13. Vorrichtung nach Anspruch 12, **dadurch gekennzeichnet, dass** der Apparat ferner umfasst:
ein Anforderungsempfangsmodul (703), das dazu konfiguriert ist, bevor das Anforderungserzeugungsmodul die Verbindungsanforderung erzeugt, die die Gerätekennung des zu verbindenden elektronischen Geräts und das dem Endgerät entsprechende Benutzerkonto trägt, eine von dem zu verbindenden elektronischen Gerät gesendete Netzzugriffsanforderung zu erhalten, wobei die Netzzugriffsanforderung dazu konfiguriert ist, den Zugriff auf ein drahtloses Netz anzufordern, auf das das Endgerät derzeit zugreift, und die Netzzugriffsanforderung die Gerätekennung des elektronischen Geräts umfasst,
ein zweites Sendemodul (704), das dazu konfiguriert ist, eine Netzzugriffsanforderungsanfrage gemäß der Netzzugriffsanfrage zu erzeugen, die von dem Anforderungsempfangsmodul empfangen wird, und die Netzzugriffsanforderungsanfrage an den Server sendet, wobei die Netzzugriffsanforderungsanfrage das Benutzerkonto und die Gerätekennung umfasst,
ein Informationsempfangsmodul (705), das dazu konfiguriert ist, Anweisungsinformationen zu empfangen, die von dem Server gesendet werden, wobei die Anweisungsinformationen von dem Server gesendet werden, wenn der Server feststellt, dass es eine Einlösungsaufzeichnung gibt, die dem Benutzerkonto und der Gerätekennung in dem Server gemäß der von dem zweiten Sendemodul gesendeten Netzzugangsanfrage entspricht, und
ein Netzzugangsmodul (706), das so konfiguriert ist, dass das elektronische Gerät gemäß den vom Informationsempfangsmodul empfangenen Befehlsinformationen auf das drahtlose Netz zugreifen kann.

## Revendications

1. Procédé destiné à lier un dispositif, le procédé étant appliqué dans un serveur et comprenant :
la réception (101) d'une requête de liaison envoyée depuis un terminal, dans lequel la requête de liaison comprend une identification de dispositif d'un dispositif électronique à lier ;
le procédé étant **caractérisé en ce que** la requête de liaison comprend en outre un compte d'utilisateur correspondant au terminal ; et **en ce que** le procédé comprend en outre :
le fait de détecter (102) s'il existe un enregistrement de remboursement correspondant au compte d'utilisateur et à l'identification de dispositif dans le serveur, dans lequel l'enregistrement de remboursement indique un utilisateur qui retourne le dispositif électronique via le compte d'utilisateur, et dans lequel l'enregistrement de remboursement est établi par le serveur sur la base de l'identification de dispositif qui est envoyée depuis une tierce partie au compte d'utilisateur et est reçue par le serveur ; et
lorsqu'il existe un enregistrement de remboursement correspondant au compte d'utilisateur et à l'identification de dispositif dans le serveur, la liaison (103) du compte d'utilisateur et de l'identification de dispositif.

2. Procédé selon la revendication 1, **caractérisé en ce qu'**avant la réception (101) d'une requête de liaison envoyée depuis un terminal, le procédé comprend en outre :
la réception (303) d'une requête de demande d'accès à un réseau envoyée depuis le terminal, dans lequel la requête de demande d'accès à un réseau comprend le compte d'utilisateur correspondant au terminal et à l'identification de dispositif du dispositif électronique qui requiert l'accès à un réseau sans fil, et le réseau sans fil est un réseau auquel le terminal est en cours d'accès ;
le fait de détecter (304) s'il existe un enregistrement de remboursement correspondant au compte d'utilisateur et à l'identification de dispositif dans le serveur ; et
lorsqu'il existe un enregistrement de remboursement correspondant au compte d'utilisateur et à l'identification de dispositif dans le serveur, l'envoi (305) d'une information d'instruction au terminal, dans lequel l'information d'instruction est configurée pour donner l'instruction d'activer le dispositif électronique pour accéder au réseau sans fil de sorte que le terminal génère et envoie la requête de liaison.

3. Procédé selon la revendication 1 ou 2, **caractérisé en ce que** l'enregistrement de remboursement correspondant au compte d'utilisateur et à l'identification de dispositif est stocké par le serveur lorsqu'un utilisateur retourne le dispositif électronique via le compte d'utilisateur.

4. Procédé selon la revendication 1, **caractérisé en ce que** le compte d'utilisateur correspondant au terminal comprend un compte d'utilisateur qui est connecté au terminal ou à un compte d'utilisateur qui est entré dans le terminal par un utilisateur.

5. Procédé selon la revendication 1, **caractérisé en ce que** l'identification de dispositif du dispositif électronique à lier est obtenue par le terminal en fonction d'une requête d'accès à un réseau diffusée par le dispositif électronique à relier.

6. Procédé destiné à relier un dispositif, le procédé étant appliqué dans un terminal et comprenant :
la génération (201) d'une requête de liaison portant une identification de dispositif d'un dispositif électronique à lier ;
le procédé étant **caractérisé en ce que** la requête de liaison comprend en outre un compte d'utilisateur correspondant au terminal ; et **en ce que** le procédé comprend en outre :
l'envoi (202) de la requête de liaison à un serveur, dans lequel la requête de liaison est configurée pour donner l'instruction au serveur de lier le compte d'utilisateur et l'identification de dispositif lorsque le serveur détermine qu'il existe un enregistrement de remboursement correspondant au compte d'utilisateur et à l'identification de dispositif dans le serveur,
dans lequel l'enregistrement de retour indique un utilisateur retournant le dispositif électronique via le compte d'utilisateur, dans lequel l'enregistrement de remboursement est établi par le serveur sur la base de l'identification de dispositif qui est envoyée depuis une tierce partie au compte d'utilisateur et est reçue par le serveur.

7. Procédé selon la revendication 6, **caractérisé en ce qu'**avant la génération (201) d'une requête de liaison portant une identification de dispositif d'un dispositif électronique à relier et un compte d'utilisateur correspondant au terminal, le procédé comprend en outre :
la réception (301) d'une requête d'accès à un réseau diffusée par le dispositif électronique à lier, dans lequel la requête d'accès à un réseau est configurée pour requérir l'accès à un réseau sans fil auquel le terminal est en cours d'accès, et la requête d'accès à un réseau comprend l'identification de dispositif du dispositif électronique ;
la génération (302) d'une requête de demande d'accès à un réseau en fonction de la requête d'accès à un réseau et l'envoi de la requête de demande d'accès à un réseau au serveur, dans lequel la requête de demande d'accès à un réseau comprend le compte d'utilisateur et l'identification de dispositif ;
la réception (306) d'une information d'instruction envoyée par le serveur, dans lequel l'information d'instruction est envoyée par le serveur lorsque le serveur détermine qu'il existe un enregistrement de remboursement correspondant au compte d'utilisateur et à l'identification de dispositif dans le serveur en fonction de la requête de demande d'accès à un réseau ; et
l'activation (307) du dispositif électronique pour accéder au réseau sans fil en fonction de l'information d'instruction.

8. Procédé selon la revendication 7, **caractérisé en ce que** l'enregistrement de remboursement correspondant au compte d'utilisateur et à l'identification de dispositif est stocké par le serveur lorsqu'un utilisateur retourne le dispositif électronique via le compte d'utilisateur.

9. Procédé selon l'une quelconque des revendications 6 à 8, **caractérisé en ce que** le compte d'utilisateur correspondant au terminal comprend un compte d'utilisateur qui est connecté au terminal ou à un compte d'utilisateur qui est entré dans le terminal par un utilisateur.

10. Appareil destiné à relier un dispositif, l'appareil étant appliqué dans un serveur et comprenant :
un premier module de réception (401, 501) configuré pour recevoir une requête de liaison envoyée depuis un terminal, dans lequel la requête de liaison comprend une identification de dispositif d'un dispositif électronique à relier ;
l'appareil étant **caractérisé en ce que** la requête de liaison comprend en outre un compte d'utilisateur correspondant au terminal ; et **en ce que** l'appareil comprend en outre :
un premier module de détection (402, 502) configuré pour détecter s'il existe dans le serveur un enregistrement de remboursement correspondant au compte d'utilisateur et à l'identification de dispositif reçu par le premier module de réception, dans lequel l'appareil étant **caractérisé en ce que** l'enregistrement de remboursement indique un utilisateur retournant le dispositif électronique via le compte d'utilisateur, et dans lequel l'enregistrement de remboursement est établi par le serveur sur la base de l'identification de dispositif qui est envoyée depuis une tierce partie au compte d'utilisateur et est reçue par le serveur ; et
un module de liaison de dispositif (403, 503) configuré pour, lorsqu'il existe un enregistrement de remboursement correspondant au compte d'utilisateur et à l'identification de dispositif dans le serveur, relier le compte d'utilisateur et l'identification de dispositif.

11. Appareil selon la revendication 10, **caractérisé en ce que** l'appareil comprend en outre :
un second module de réception (504) configuré pour, avant que le premier module de réception ne reçoive la requête de liaison envoyée par le terminal, recevoir une requête de demande d'accès à un réseau envoyée depuis le terminal, dans lequel la requête de demande d'accès à un réseau comprend le compte d'utilisateur correspondant au terminal et à l'identification de dispositif du dispositif électronique qui requiert l'accès à un réseau sans fil, et le réseau sans fil est un réseau auquel le terminal est en cours d'accès ;
un second module de détection (505) configuré pour détecter s'il existe dans le serveur un enregistrement de remboursement correspondant au compte d'utilisateur et à l'identification de dispositif reçu par le second module de réception ; et
un module d'envoi d'information (506) configuré pour, lorsqu'il existe un enregistrement de remboursement correspondant au compte d'utilisateur et à l'identification de dispositif dans le serveur, envoyer une information d'instruction au terminal, dans lequel l'information d'instruction est configurée pour donner l'instruction d'activer le dispositif électronique pour accéder au réseau sans fil de sorte que le terminal génère et envoie la requête de liaison.

12. Appareil destiné à relier un dispositif, l'appareil étant appliqué dans un terminal et comprenant :
un module de génération de requête (601, 701) configuré pour générer une requête de liaison portant une identification de dispositif d'un dispositif électronique à relier ;
l'appareil étant **caractérisé en ce que** la requête de liaison comprend en outre un compte d'utilisateur correspondant au terminal ; et **en ce que** l'appareil comprend en outre :
un premier module d'envoi (602, 702) configuré pour envoyer la requête de liaison générée par le module de génération de requête à un serveur, dans lequel la requête de liaison est configurée pour donner l'instruction au serveur de relier le compte d'utilisateur et l'identification de dispositif lorsque le serveur détermine qu'il existe un enregistrement de remboursement correspondant au compte d'utilisateur et à l'identification de dispositif dans le serveur,
dans lequel l'enregistrement de remboursement indique un utilisateur retournant le dispositif électronique via le compte d'utilisateur, et dans lequel l'enregistrement de retour est établi par le serveur sur la base de l'identification de dispositif qui est envoyée depuis une tierce partie au compte d'utilisateur et est reçue par le serveur.

13. Appareil selon la revendication 12, **caractérisé en ce que** l'appareil comprend en outre :
un module de réception de requête (703) configuré pour, avant que le module de génération de requête ne génère la requête de liaison portant l'identification de dispositif du dispositif électronique à lier et le compte d'utilisateur correspondant au terminal, obtenir une requête d'accès à un réseau diffusée par le dispositif électronique à relier, dans lequel la requête d'accès à un réseau est configurée pour requérir l'accès à un réseau sans fil auquel le terminal est en cours d'accès, et la requête d'accès à un réseau comprend l'identification de dispositif du dispositif électronique ;
un second module d'envoi (704) configuré pour générer une requête de demande d'accès à un réseau en fonction de la requête d'accès à un réseau reçue par le module de réception de requête et envoyer la requête de demande d'accès à un réseau au serveur, dans lequel la requête de demande d'accès à un réseau comprend le compte d'utilisateur et l'identification de dispositif ;
un module de réception d'information (705) configuré pour recevoir une information d'instruction envoyée par le serveur, dans lequel l'information d'instruction est envoyée par le serveur lorsque le serveur détermine qu'il existe un enregistrement de remboursement correspondant au compte d'utilisateur et à l'identification de dispositif dans le serveur en fonction de la requête de demande d'accès à un réseau envoyée par le second module d'envoi ; et
un module d'accès à un réseau (706) configuré pour activer le dispositif électronique pour accéder au réseau sans fil en fonction de l'information d'instruction reçue par le module de réception d'information.
